(19) Europäisches Patentamt
European Patent Office
Office européen des brevets

(11) **EP 4 637 131 A1**

(12) **EUROPEAN PATENT APPLICATION**
published in accordance with Art. 153(4) EPC

(43) Date of publication:
**22.10.2025 Bulletin 2025/43**

(21) Application number: **23902028.2**

(22) Date of filing: **30.05.2023**

(51) International Patent Classification (IPC):
**H04N 5/208** (2006.01)

(52) Cooperative Patent Classification (CPC):
**H04N 5/208; H04N 23/67**

(86) International application number:
**PCT/CN2023/097002**

(87) International publication number:
**WO 2024/124816 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 CN 202211613146**

(71) Applicant: **Zhejiang Uniview Technologies Co.,
Ltd.
Hangzhou, Zhejiang 310051 (CN)**

(72) Inventor: **SHI, Fei
Hangzhou, Zhejiang 310051 (CN)**

(74) Representative: **HGF
HGF Limited
1 City Walk
Leeds LS11 9DX (GB)**

(54) **DIGITAL ZOOM METHOD AND APPARATUS, ELECTRONIC DEVICE AND STORAGE MEDIUM**

(57) Provided are a digital zoom method and apparatus, an electronic device, and a storage medium. The method includes: acquiring a distortion correction parameter, a rotation parameter, and a center deviation parameter that are obtained through pre-calibration; determining digital zoom magnifications matching a plurality of frames of images according to a digital zoom threshold and zoom time; determining distortion correction parameters matching the plurality of frames of images according to a preset parameter determination rule and the distortion correction parameter, and determining rotation parameters matching the plurality of frames of images according to the preset parameter determination rule and the rotation parameter; and performing distortion correction on the plurality of frames of images sequentially according to the matched distortion correction parameters, performing translation according to the center deviation parameter, performing rotation according to the matched rotation parameters, and performing cropping and reconstruction according to the matched digital zoom magnifications to implement digital zoom.

FIG. 1

## Description

The present application claims priority to Chinese Patent Application No. 202211613146.4 filed with the CNIPA on Dec. 15, 2022, the disclosure of which is incorporated herein by reference in its entirety.

TECHNICAL FIELD

The present application relates to the field of image processing technology, for example, a digital zoom method and apparatus, an electronic device, and a storage medium.

BACKGROUND

With the development of video surveillance technology, zoom cameras have increasingly widespread applications. A zoom camera usually uses multiple lenses for imaging separately. The multiple lenses are responsible for different focal ranges respectively. The multiple lenses constitute a camera with an extended zoom range through focal length stitching.

However, in the process of performing digital zoom on a lens, an image jump may occur when lenses with different focal lengths are switched. The main reason is that when different lenses are mounted, optical axes cannot coincide with each other. The existence of optical axis spacing and rotation deviations causes an image center jump to occur when the lenses are switched. Meanwhile, the in-plane rotation angle of an image sensor between different lenses is inconsistent. An image rotation jump may occur when lens switching is performed. Additionally, a short-focus lens has a relatively serious distortion degree, and the distortion degree of a medium-telephoto lens reduces gradually. In this case, an image distortion jump occurs when lens switching is performed. In order to solve the preceding problems, it is often necessary to perform center correction, rotation correction and distortion correction on images of one or more lenses. However, in the process of image correction, part of the field angles may be lost. Moreover, in the digital zoom process, the switching of image correction parameters may also cause the problem of an abrupt change of an image.

SUMMARY

The present application provides a digital zoom method and apparatus, an electronic device, and a storage medium to implement the smooth image transition in the digital zoom process and reduce the loss of field angles.

According to an aspect of the present application, a digital zoom method is provided. The method includes the steps below.

A distortion correction parameter, a rotation parameter, and a center deviation parameter that are obtained through pre-calibration are acquired.

Digital zoom magnifications matching a plurality of frames of images are determined according to a digital zoom threshold and zoom time.

Distortion correction parameters matching the plurality of frames of images are determined according to a preset parameter determination rule and the distortion correction parameter, and rotation parameters matching the plurality of frames of images are determined according to the preset parameter determination rule and the rotation parameter.

Distortion correction is performed on the plurality of frames of images sequentially according to the matched distortion correction parameters, translation is performed according to the center deviation parameter, rotation is performed according to the matched rotation parameters, and cropping and reconstruction are performed according to the matched digital zoom magnifications to implement digital zoom.

According to another aspect of the present application, a digital zoom apparatus is provided. The apparatus includes a parameter acquisition module, a digital zoom magnification determination module, a parameter determination module, and a digital zoom module.

The parameter acquisition module is configured to acquire a distortion correction parameter, a rotation parameter, and a center deviation parameter that are obtained through pre-calibration.

The digital zoom magnification determination module is configured to determine, according to a digital zoom threshold and zoom time, digital zoom magnifications matching a plurality of frames of image.

The parameter determination module is configured to determine, according to a preset parameter determination rule and the distortion correction parameter, distortion correction parameters matching the plurality of frames of images and determine, according to the preset parameter determination rule and the rotation parameter, rotation parameters matching the plurality of frames of images.

The digital zoom module is configured to perform distortion correction on the plurality of frames of images sequentially according to the matched distortion correction parameters, perform translation according to the center deviation parameter, perform rotation according to the matched rotation parameters, and perform cropping and reconstruction according to the matched digital zoom magnifications to implement digital zoom.

According to another aspect of the present application, an electronic device is provided. The electronic device includes at least one processor and a memory.

The memory is communicatively connected to the at least one processor.

The memory stores a computer program executable by the at least one processor. The computer program is executed by the at least one processor to cause the at least one processor to perform the digital zoom method according to any embodiment of the present application.

According to another aspect of the present application, a computer-readable storage medium for storing computer instructions is provided. The computer instructions, when executed by a processor, implement the digital zoom method according to any embodiment of the present application.

BRIEF DESCRIPTION OF DRAWINGS

FIG. 1 is a flowchart of a digital zoom method according to an embodiment of the present application.

FIG. 2A is a diagram of the capturing ranges of a first lens and a second lens in the digital zoom method according to an embodiment of the present application.

FIG. 2B is a diagram of a capturing range after translation in the digital zoom method according to an embodiment of the present application.

FIG. 2C is a diagram of another capturing range after translation in the digital zoom method according to an embodiment of the present application.

FIG. 3 is a diagram of a first distortion rate curve and a second distortion rate curve of the digital zoom method according to an embodiment of the present application.

FIG. 4 is a diagram of a relationship curve between focus positions and object distances of the digital zoom method according to an embodiment of the present application.

FIG. 5 is a diagram of a lens center deviation of the digital zoom apparatus according to an embodiment of the present application.

FIG. 6 is a flowchart of the digital zoom method according to another embodiment of the present application.

FIG. 7 is a structure diagram of a digital zoom apparatus according to an embodiment of the present application.

FIG. 8 is a structure diagram of an electronic device for implementing a digital zoom method according to an embodiment of the present application.

DETAILED DESCRIPTION

It is to be noted that the terms "first", "second", "target" and the like in the description, claims and drawings of the present application are used to distinguish between similar objects and are not necessarily used to describe a particular order or sequence. It should be understood that the data used in this way is interchangeable where appropriate so that embodiments of the present application described herein may also be implemented in a sequence not illustrated or described herein. In addition, the terms "comprising", "including" or any other variations thereof herein are intended to encompass a non-exclusive inclusion. For example, a process, method, system, product or device that includes a series of steps or elements not only includes the expressly listed steps or elements but may also include other steps or elements that are not expressly listed or are inherent to such process, method, system, product or device.

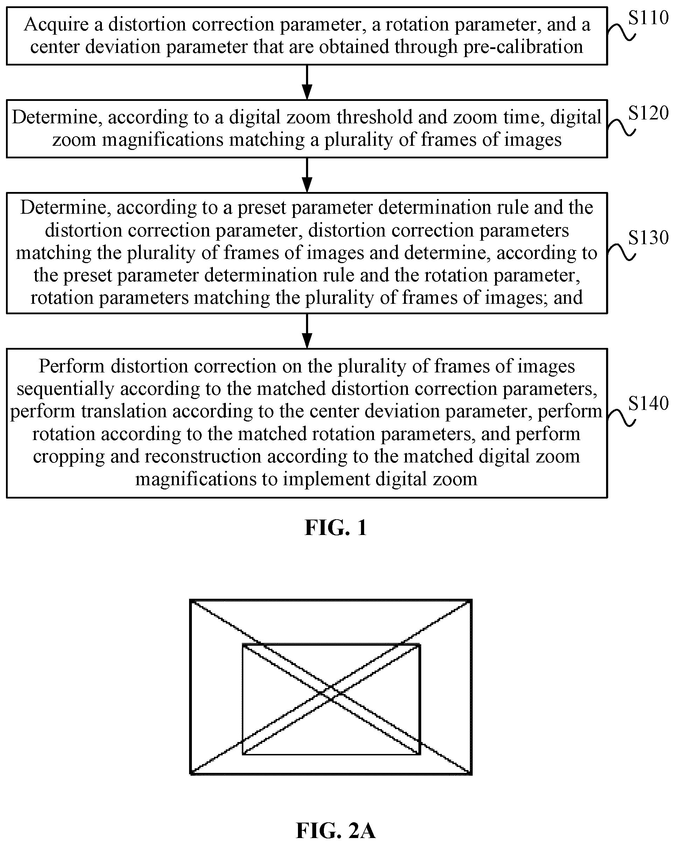

FIG. 1 is a flowchart of a digital zoom method according to an embodiment of the present application. This embodiment of the present application may be applied to the case where multiple frames of images are adjusted in the digital zoom process. The method may be performed by a digital zoom apparatus. The digital zoom apparatus may be implemented by hardware and/or software and may be configured in an electronic device with data processing ability. As shown in FIG. 1, the method includes the steps below.

In S110, a distortion correction parameter, a rotation parameter, and a center deviation parameter that are obtained through pre-calibration are acquired.

The distortion correction parameter is used to correct the lens distortion of an image. Lens distortion represents the distortion degree of imaging of a lens at different field angles. Lens distortion generally includes radial distortion and tangential distortion. Radial distortion is generally caused by a curvature change defect of the lens and has a relatively great effect on the distortion degree. Tangential distortion is generally caused by the lens and an imaging surface being not parallel. Because an image sensor can guarantee the parallelism with the lens during installation, tangential distortion can be ignored. Therefore, lens distortion in this embodiment refers to radial distortion.

For example, the rotation parameter is used to represent a difference in the in-plane rotation angle of the image sensor between different lenses. For example, the center deviation parameter is used to correct a deviation between imaging centers of different lenses. A center deviation is related to an object distance. Center deviations under different object distances are different. Therefore, the mapping relationship between different object distances and center deviations may be obtained through pre-calibration. In this embodiment of the present application, after the current object distance is obtained, the center deviation parameter is obtained.

In this embodiment of the present application, by way of example, a zoom imaging device includes two lenses, namely, a first lens and a second lens. The first lens is a fixed-focus short-focus lens with a focal length of f1. The second lens is a zoom long-focus lens with a focal length of f2 to f3, and f1 < f2 < f3. When the focal length changes from small to large and between f1 and f2, digital zoom is performed on the imaging of the first lens. In the digital zoom process, gradual distortion correction, rotation correction and center offset correction are performed on a plurality of frames of images so as to implement smooth image transition in the digital zoom process and reduce the loss of field angles. In this embodiment of the present application, the process in which the focal length changes from f2 to f3 is implemented by using the second lens. The zoom process of the second lens is not repeated here in this embodiment. It is to be noted that the number of lenses is not limited in this embodiment. When three or more lenses are provided, in the digital zoom process of any lens, digital zoom may be performed in the same manner as in this embodiment.

In this embodiment of the present application, the distortion correction parameter may be used to perform distortion correction on the plurality of frames of images in the digital zoom process so as to avoid the effect of lens distortion on an image jump. The center deviation parameter may be used to perform translation correction on the plurality of frames of images in the digital zoom process so as to avoid the effect of inconsistent lens imaging centers on an image jump. The rotation parameter may be used to perform rotation correction on the plurality of frames of images in the digital zoom process so as to avoid the effect of a difference in the in-plane rotation angle of the image sensor between different lenses on an image jump.

In S120, digital zoom magnifications matching the plurality of frames of images are determined according to a digital zoom threshold and zoom time.

The digital zoom threshold may be determined according to a scaling coefficient, a center correction scaling rate, and a rotation correction scaling rate. For example, the digital zoom threshold may be a product of the scaling coefficient, the center correction scaling rate, and the rotation correction scaling rate.

For example, the zoom time is the time required for completing the digital zoom process. The zoom time may reflect the zoom speed required by a user. For example, the higher the zoom speed, the shorter the zoom time; and the lower the zoom speed, the longer the zoom time. In an embodiment, the zoom time is determined according to the zoom speed information set by the user and a predetermined correspondence between the zoom speed and the zoom time. In another embodiment, the zoom time information set by the user is acquired, thereby determining the zoom time.

For example, in the digital zoom process, the plurality of frames of images have different digital zoom magnifications. For example, in an embodiment, the process of determining the digital zoom magnifications matching the plurality of frames of images may be as follows. The digital zoom threshold is split evenly according to the total number of frames of images displayable within the zoom time to obtain a first number (the first number is equal to the total number of the plurality of frames of images within the zoom time) of digital zoom magnifications with gradually increasing numerical values and determine the digital zoom magnifications matching the plurality of frames of images one by one. The preceding description is merely an example of determining the digital zoom magnifications matching the plurality of frames of images. The process of determining the digital zoom magnifications matching the plurality of frames of images is not limited in this embodiment of the present application.

In S130, distortion correction parameters matching the plurality of frames of images are determined according to a preset parameter determination rule and the distortion correction parameter, and rotation parameters matching the plurality of frames of images are determined according to the preset parameter determination rule and the rotation parameter.

In this embodiment of the present application, in the digital zoom process, distortion correction and rotation correction need to be performed on the plurality of frames of images gradually to implement smooth image transition in the digital zoom process and reduce the loss of field angles. For example, the preset parameter determination rule may be determined according to an actual situation. For example, the preset parameter determination rule may be as follows. The distortion correction parameter is split evenly into the first number (the first number is equal to the total number of the plurality of frames of images within the zoom time), and the split distortion correction parameters are sequentially determined as distortion correction parameters matching the plurality of frames of images in ascending order; in this case, the distortion correction parameters matching the plurality of frames of images increase monotonically, and a distortion correction parameter matching the last frame of image is the distortion correction parameter obtained through pre-calibration.

Similarly, the rotation parameters matching the plurality of frames of images may be determined according to the preset parameter determination rule so that the rotation parameters matching the plurality of frames of images increase monotonically. Moreover, a rotation parameter matching the last frame of image is the rotation parameter obtained through pre-calibration. The preceding preset parameter determination rule is merely an example. The preset parameter determination rule is not limited in this embodiment of the present application.

In S140, distortion correction is performed on the plurality of frames of images sequentially according to the matched distortion correction parameters, translation is performed according to the center deviation parameter, rotation is performed according to the matched rotation parameters, and cropping and reconstruction are performed according to the matched digital zoom magnifications to implement digital zoom.

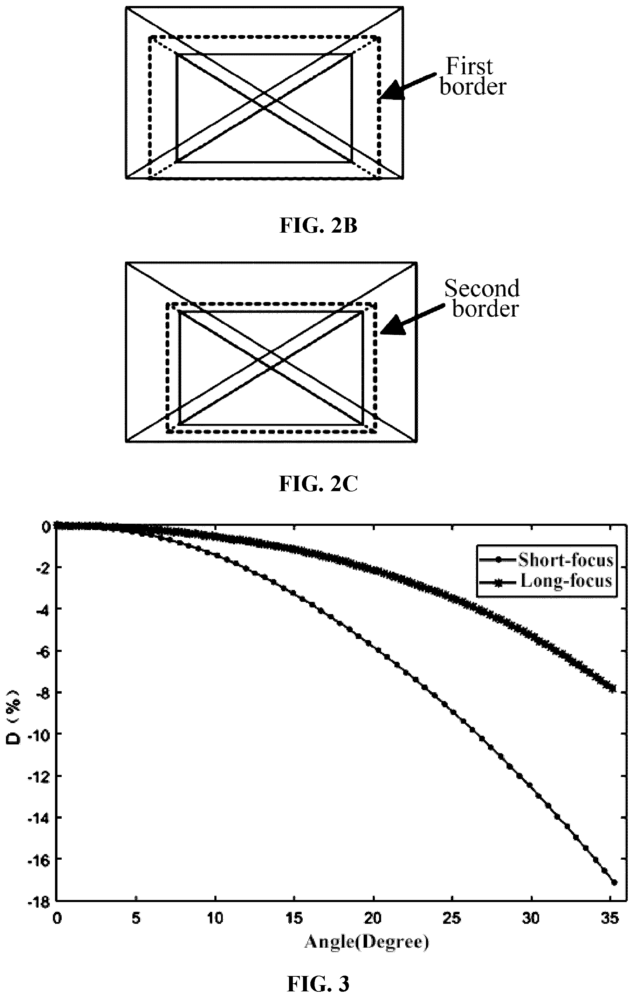

In an embodiment, the process of performing digital zoom on each frame of image is as follows. When the focal length is $f_1$, the image capturing range of the first lens is shown as the outer border in FIG. 2A; and when the focal length is $f_2$, the image capturing range of the second lens is shown as the inner border in FIG. 2A. It is to be noted that the border range indicates only the field of view size during imaging but does not indicate image resolution. The outer border and the inner border have the same resolution. Gradual digital zoom is performed on the plurality of frames of images. For example, a first border of FIG. 2B and a second border of FIG. 2C are results of digital zoom performed on two frames of images among the plurality of frames of images. After the last frame of image coincides with the image capturing range of the second lens when the focal length is $f_2$, digital zoom is completed.

In an embodiment, when the plurality of frames of images are translated according to the center deviation parameter, the plurality of frames of images may be translated gradually to implement smooth image transition in the digital zoom process and reduce the loss of field angles. For example, the preset parameter determination rule may be determined according to an actual situation. For example, the preset parameter determination rule may be as follows. The center deviation parameter is split evenly into the first number (the first number is equal to the total number of the plurality of frames of images within the zoom time), and the split center deviation parameters are sequentially determined as center deviation parameters matching the plurality of frames of images in ascending order; in this case, the center deviation parameters matching the plurality of frames of images increase monotonically, and a center deviation parameter matching the last frame of image is the center deviation parameter obtained through pre-calibration.

In another embodiment, when translation is performed on the plurality of frames of images according to the center deviation parameter, each of the plurality of frames of images may be translated according to the center deviation parameter to obtain a plurality of frames of images corrected through center translation. The specific manner of the correction through center translation is not limited in this embodiment of the present application.

For example, after distortion correction, translation correction and rotation correction are performed on the plurality of frames of images, the corrected plurality of frames of images are cropped according to the matched digital zoom magnifications. For example, one frame of image among the plurality of frames of images is taken as an example. The length of the cropped image is a product of the length of the image before cropping and a digital zoom magnification matching the image. The width of the cropped image is a product of the width of the image before cropping and the digital zoom magnification matching the image.

Super-resolution reconstruction is performed on the cropped plurality of frames of images to magnify the next frame of image to have the resolution of the previous frame of image. Super-resolution reconstruction refers to obtaining a high-resolution image by using a certain image processing algorithm on a sequence of some low-resolution images. The adopted super-resolution reconstruction algorithm is not limited in this embodiment.

The technical solution in this embodiment of the present application includes the following. A distortion correction parameter, a rotation parameter, and a center deviation parameter that are obtained through pre-calibration are acquired; digital zoom magnifications matching a plurality of frames of images are determined according to a digital zoom threshold and zoom time; distortion correction parameters matching the plurality of frames of images are determined according to a preset parameter determination rule and the distortion correction parameter, and rotation parameters matching the plurality of frames of images are determined according to the preset parameter determination rule and the rotation parameter; and distortion correction is performed on the plurality of frames of images sequentially according to the matched distortion correction parameters, translation is performed according to the center deviation parameter, rotation is performed according to the matched rotation parameters, and cropping and reconstruction are performed according to the matched digital zoom magnifications to implement digital zoom. According to this technical solution, in the digital zoom process, distortion correction, center translation correction, and rotation correction are gradually performed on the plurality of frames of images, so that the abrupt change degree of adjacent frames of images is relatively small, implementing smooth image transition in the digital zoom process and reducing the loss of field angles.

For example, the calibration process of the distortion correction parameter includes A1 to A5 below.

In A1, a first checkerboard calibration image of the first lens when the object distance is infinite and a second checkerboard calibration image of the second lens when the object distance is infinite are acquired separately, and corner recognition is performed on the first checkerboard calibration image and the second checkerboard calibration image separately.

For example, the imaging effect when the object distance is infinite may be simulated by adjusting a teleconverter. In this embodiment of the present application, the first lens performs capturing when the checkerboard image is perpendicular to the optical axis of the first lens and the object distance is infinite, thereby obtaining the first checkerboard calibration image; and the second lens performs capturing when the checkerboard image is perpendicular to the optical axis of the second lens and the object distance is infinite, thereby obtaining the second checkerboard calibration image.

Corner recognition is used to recognize and obtain a corner position in the first checkerboard calibration image and a corner position in the second checkerboard calibration image. A corner is an extremum point and may be an intersection of two lines. Corner recognition may be performed by using, for example, a Kitchen-Rosenfeld corner detection algorithm, a Harris corner detection algorithm, or a SUSAN corner detection algorithm. The specific algorithm used for corner recognition is not limited in this embodiment.

In A2, distortion rates of a plurality of corners in the second checkerboard calibration image are determined to obtain a second distortion rate curve.

For the plurality of corners recognized in the second checkerboard calibration image, the actual distance from each corner to the image center of the second checkerboard calibration image and the ideal distance from each corner to the image center of the second checkerboard calibration image are calculated respectively.

The actual distance may be represented by the following formula: $r_d=\sqrt{x^2+y^2}$ . Here, $r_d$ denotes the actual distance of a corner to the image center, and (x, y) denote pixel coordinates of a corner when the image center is an origin.

The ideal distance may be represented by the following formula: $r_i=\sqrt{(na)^2+(ma)^2}$ . Here, $r_i$ denotes the ideal distance from a corner to the image center, a denotes the pixel size of a checkerboard matching the image center, n is the number of checkerboards from a corner to the image center in the width direction of the second checkerboard calibration image, and m denotes the number of checkerboards from a corner to the image center in the height direction of the second checkerboard calibration image.

After actual distances and ideal distances are obtained for the plurality of corners respectively, the distortion rates of the plurality of corners are obtained through calculation. A distortion rate may be a value obtained by dividing a difference between an actual distance and a respective ideal distance by the ideal distance.

Because the distance between each corner and the image center is different, the field angle at the position where each corner is located is different. The field angle of each corner may be represented by the following formula: $\alpha=a\tan\frac{r_i}{f}$ .

Here, $\alpha$ denotes the field angle corresponding to a corner, and f denotes the focal length of the second lens.

Therefore, the field angles and distortion rates of the plurality of corners are obtained separately, thereby obtaining distortion rate curves at different field angles. FIG. 3 is a diagram of a first distortion rate curve and a second distortion rate curve. As shown in FIG. 3, a short-focus lens is the first lens, and a long-focus lens is the second lens. The first distortion rate curve and the second distortion rate curve are obtained for the first checkerboard calibration image and the second checkerboard calibration image respectively. It can be seen according to FIG. 3 that the distortion degree of the first lens is higher than the distortion degree of the second lens.

In A3, a first distortion coefficient is obtained by fitting according to corner actual distances of a plurality of corners in the first checkerboard calibration image and corner ideal distances of the plurality of corners in the first checkerboard calibration image.

For the plurality of corners in the first checkerboard calibration image, each actual distance and each ideal distance are obtained in the same way. Lens distortion may be represented by the following formula: $r_d=r_i(1+kr_i^2)$. Here, k denotes a distortion parameter. The preceding formula is fitted according to actual distances of the plurality of corners and ideal distances of the plurality of corners to obtain the first distortion coefficient matching the first lens.

In A4, distortion correction is performed on the first checkerboard calibration image according to a target distortion coefficient, and a target distortion rate curve is obtained according to distortion rates of the plurality of corners in the first checkerboard calibration image after distortion correction.

The value of the target distortion coefficient ranges from 0 to the first distortion coefficient.

The first distortion coefficient is used to represent a distortion coefficient when an ideal image reaches the actual imaging effect of the first lens. The distortion correction parameter is used to represent a distortion coefficient when the first checkerboard calibration image needs to reach the actual imaging effect of the second lens. It can be seen according to FIG. 3 that the value of the distortion correction parameter ranges from 0 to the first distortion coefficient. Therefore, 0 to the first distortion coefficient are traversed according to a preset search step to obtain the distortion correction parameter.

In this embodiment of the present application, the target distortion coefficient is the value of a distortion coefficient when 0 to the first distortion coefficient are traversed based on the preset search step. Distortion correction is performed on the first checkerboard calibration image according to the target distortion coefficient. Corner recognition is performed on the first checkerboard calibration image after distortion correction in the same way. The field angles and the distortion rates are calculated for the plurality of corners separately, and the target distortion rate curve after distortion correction is performed on the first checkerboard calibration image according to the target distortion coefficient is obtained.

For example, the distortion correction of the first checkerboard calibration image by the target distortion coefficient may be implemented by the following formulas: $x_d=x(1+k_ir^2)$, $y_d=y(1+k_ir^2)$, and $r^2=x^2+y^2$. Here, (x, y) denote pixel coordinates in the first checkerboard calibration image, $(x_d, y_d)$ denote pixel coordinates with the first checkerboard calibration image distortion corrected by the target distortion coefficient, and $k_i$ denotes the target distortion coefficient. For example, if $x_d$ and $y_d$ obtained through calculation are floating-point numbers, integer values matching $x_d$ and $y_d$ may be obtained in the manner of bilinear interpolation. The manner of bilinear interpolation is an interpolation manner in the related art. The specific process of bilinear interpolation is not repeated in this embodiment.

In A5, a corresponding target distortion coefficient when an error between the target distortion rate curve and the second distortion rate curve meets a preset error condition is taken as the distortion correction parameter.

When 0 to the first distortion coefficient are traversed, values of multiple target distortion coefficients are calculated separately to obtain the corresponding target distortion rate curve.

For example, the preset error condition may be that the minimum square error between the target distortion rate curve and the second distortion rate curve is the smallest. Alternatively, Euclidean distances between multiple distortion rate curves and the second distortion rate curve may be calculated. The preset error condition is that the Euclidean distance between the target distortion rate curve and the second distortion rate curve is the smallest. However, the preset error condition is not limited in this embodiment.

For example, distortion correction may be performed on the plurality of frames of images according to the following formulas, with a target frame of image among the plurality of frames of images taken as an example: $x_d=x(1+k_xr^2)$, $y_d=(1+k_xr^2)$, and $r^2=x^2+y^2$. Here, (x, y) denote pixel coordinates in the target frame of image, $(x_d, y_d)$ denote pixel coordinates in the target frame of image after distortion correction, and $k_x$ denotes a distortion correction parameter matching the target frame of image.

In this embodiment of the present application, for example, the calibration process of the center deviation parameter includes B1 to B2.

In B1, the current object distance is determined according to the current zoom position of the second lens of an imaging device, the current focus position of the second lens, and a relationship curve between focus positions and object distances of the second lens.

For example, for the imaging device of a fixed scenario, the current object distance is determined according to B1 after the fixed scenario so as to obtain the center deviation parameter through calculation.

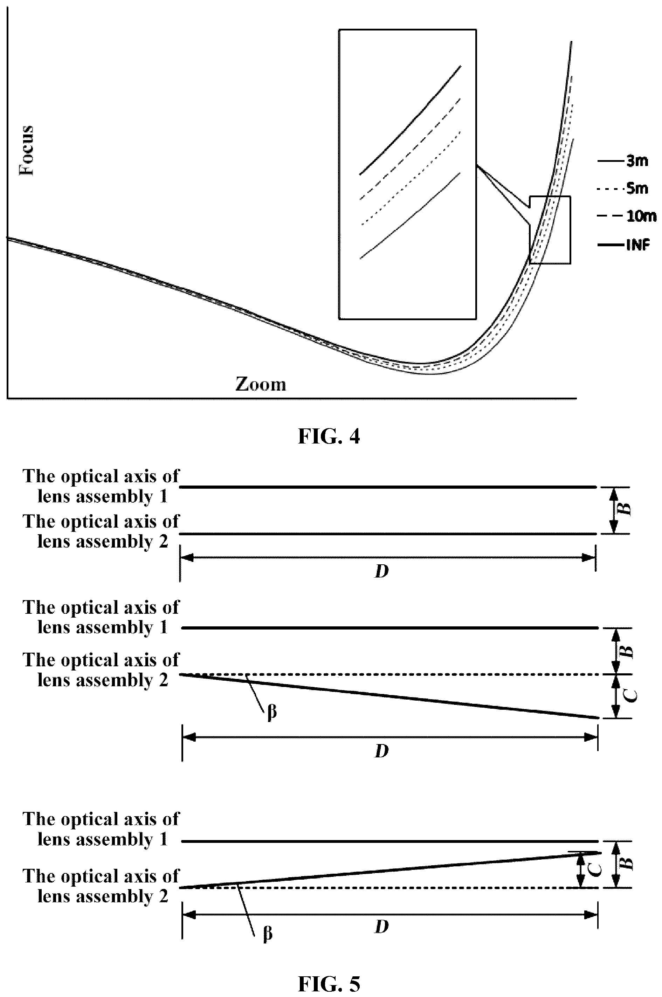

FIG. 4 is a diagram of a relationship curve between focus positions and object distances. As shown in FIG. 4, correspondences between zoom positions and focus positions at different object distances are different. The relationship curve between focus positions and object distances may be obtained through pre-calibration or through calculating an optical parameter of the zoom imaging device, which is not limited in this embodiment.

In this embodiment of the present application, the zoom position of the second lens, the focus position of the second lens, and the relationship curve between focus positions and object distances are acquired to obtain the current object distance through calculation. If the value of the zoom position and the value of the focus position are not on the preset relationship curve, linear interpolation may be performed on the preset relationship curve to obtain the current object distance. Exemplarily, a point (ZPos, FPos) is located between a curve with an object distance of 5m and a curve with an object distance of 10m, ZPos denotes a zoom position, and FPos denotes a focus position. In this case, under ZPos, a focus position corresponding to the curve with the object distance of 5m is $FPos_{5m}$, and a focus position corresponding to the curve with the object distance of 10m is $FPos_{10m}$. Then the current object distance D is calculated by the following formula:

$$D=5+\frac{(10-5)\times(FPos-FPos_{5m})}{FPos_{10m}-FPos_{5m}}.$$

For example, in a non-fixed scenario, the current pan-tilt-zoom position may be acquired, and the current object distance matching the current pan-tilt-zoom position is determined. The current object distance is determined according to the zoom position and focus position of the second lens of the imaging device at the current pan-tilt-zoom position and the relationship curve between focus positions and object distances of the second lens.

When the current scenario is a non-fixed scenario, exemplarily, a zoom imaging device may be a spherical camera apparatus or an all-in-one pan-tilt-zoom. In this case, for multiple pan-tilt-zoom positions, the object distance corresponding to each pan-tilt-zoom position is determined in advance according to the zoom position of the second lens, the focus position of the second lens, and the relationship curve between focus positions and object distances. The determination process of an object distance has been described in the preceding step, which is not repeated here. In the non-fixed scenario, the object distance corresponding to the current pan-tilt-zoom position is determined according to the current pan-tilt-zoom position.

In B2, the center deviation parameter is obtained according to the current object distance and a mapping relationship between the object distances and center deviations, where the mapping relationship is obtained through pre-calibration.

In this embodiment of the present application, for example, the calibration process of the mapping relationship between the object distances and the center deviations includes C1 to C6.

In C1, a first marker calibration image of the first lens and a second marker calibration image of the second lens at a calibration object distance are acquired separately.

For example, at the calibration object distance, the first marker calibration image is obtained by capturing a calibration image through the first lens, and the second marker calibration image is obtained by capturing the calibration image through the second lens.

Two markers with the spacing of L are set in the calibration image. Moreover, in order to facilitate subsequent feature point matching, the calibration image may be provided with as many details as possible.

In C2, feature point matching is performed on the first marker calibration image and the second marker calibration image to obtain a first feature point set and a second feature point set.

Before feature point matching is performed, distortion correction is performed on the first marker calibration image through the distortion correction parameter obtained through pre-calibration, and the first marker calibration image and the second marker calibration image after distortion correction are converted into grayscale images.

Feature point matching is performed on the two images converted into grayscale images. Matched feature point sets are recorded as the first feature point set corresponding to the first marker calibration image after distortion correction and the second feature point set corresponding to the second marker calibration image respectively.

Exemplarily, a Scale Invariant Feature Transform (SIFT) algorithm or a Speeded-Up Robust Features (SURF) algorithm may be used for feature point matching. The specific algorithm adopted for feature point matching is not limited in this embodiment.

In C3, a scaling coefficient, the rotation parameter, a center deviation abscissa value, and a center deviation ordinate value are obtained according to the first feature point set, the second feature point set, and a similarity transformation formula.

The similarity transformation formula is that Q=SRP+T. S denotes a scaling coefficient. P denotes a feature point in a grayscale image corresponding to the first marker calibration image after distortion correction. Q denotes a feature point that matches P and is in a grayscale image corresponding to the second marker calibration image.

$R = \begin{bmatrix} \cos\theta & -\sin\theta \\ \sin\theta & \cos\theta \end{bmatrix}$ . R denotes a rotation matrix. $\theta$ denotes the in-plane rotation angle of the image sensor, that is, the rotation parameter. $T = \begin{bmatrix} T_x \\ T_y \end{bmatrix}$ . T denotes a translation matrix. $T_x$ denotes the center deviation abscissa value. $T_y$

denotes the center deviation ordinate value. In this case, the relationship between P and Q in a homogeneous coordinate system may be expressed by the following formula:

$$\begin{bmatrix} x_Q \\ y_Q \\ 1 \end{bmatrix} = \begin{bmatrix} S\cos\theta & -S\sin\theta & T_x \\ S\sin\theta & S\cos\theta & T_y \\ 0 & 0 & 1 \end{bmatrix} \begin{bmatrix} x_P \\ y_P \\ 1 \end{bmatrix}.$$

$(x_Q, y_Q)$ denote pixel coordinates of Q, and $(x_P, y_P)$ denote pixel coordinates of P.

The preceding formula is converted into a formula when translation and rotation are performed with the image center as a reference point:

$$\begin{bmatrix} x_Q \\ y_Q \\ 1 \end{bmatrix} = \begin{bmatrix} 1 & 0 & W/2 \\ 0 & 1 & H/2 \\ 0 & 0 & 1 \end{bmatrix} \begin{bmatrix} S\cos\theta & -S\sin\theta & T_x \\ S\sin\theta & S\cos\theta & T_y \\ 0 & 0 & 1 \end{bmatrix} \begin{bmatrix} 1 & 0 & -W/2 \\ 0 & 1 & -H/2 \\ 0 & 0 & 1 \end{bmatrix} \begin{bmatrix} x_P \\ y_P \\ 1 \end{bmatrix}.$$

W denotes image width, and H denotes image height.

Feature point pairs in the first feature point set and the second feature point set are substituted into the preceding formula to obtain values of the four parameters, the scaling coefficient, the rotation parameter, the center deviation abscissa value, and the center deviation ordinate value.

For example, in order to reduce the effect of an error of feature point matching on a parameter calculation result, the scaling coefficient, the rotation parameter, the center deviation abscissa value, and the center deviation ordinate value can be calculated by the following steps D1 to D6.

In D1, at least two first feature point pairs are determined in the first feature point set. A first feature point pair includes two first feature points, and the distance between the two first feature points is greater than or equal to a preset distance threshold.

Two first feature points with a distance greater than or equal to the preset distance threshold are optionally selected in the first feature set to be used to calculate the scaling coefficient, the rotation parameter, the center deviation abscissa value, and the center deviation ordinate value. Such an arrangement can reduce an error caused by an excessively short distance between first feature points on parameter calculation.

In D2, a candidate transformation parameter is calculated according to each first feature point in the first feature point pairs and each second feature point matching each first feature point.

Transformation parameters are the scaling coefficient, the rotation parameter, the center deviation abscissa value, and the center deviation ordinate value.

In D3, for each remaining first feature point in the first feature point set excluding the first feature point pairs, a simulated second feature point matching the remaining first feature point is calculated according to the candidate transformation parameter.

In D4, an error between the simulated second feature point and a second feature point that is in the second feature point set and matches the remaining first feature point is calculated.

In D5, multiple candidate transformation parameters are sorted according to the number of simulated second feature points whose errors are less than a preset error threshold, in descending order.

In D6, a target transformation parameter is determined according to the sorted candidate transformation parameters.

For example, candidate transformation parameters sorted in the top N groups may be selected, and an average value of the N groups of candidate transformation parameters may be calculated as the target transformation parameter. Alternatively, the candidate transformation parameter sorted in the first place may be taken as the target transformation parameter, which is not limited in this embodiment.

In C4, a pixel deviation is determined according to the optical axis spacing between the first lens and the second lens, the number of image pixels, and marker spacing.

In C5, a translation vector is determined according to the center deviation abscissa value and the center deviation ordinate value.

In C6, the mapping relationship between the object distances and the center deviations is determined according to the pixel deviation, the translation vector, and the calibration object distance.

For example, the mapping relationship between the object distances and the center deviations may be represented by the following formulas: $\text{Offset}_D = C_2 - C_1 + C_1 * \dfrac{D_c}{D}$, $C_1 = \dfrac{Bn}{L}$, and $C_2 = (T_x, T_y)$. Here, $\text{Offset}_D$ denotes a center deviation of the first lens relative to the second lens in an object distance D, $D_c$ denotes the calibration object distance, $C_1$ denotes the pixel deviation, $C_2$ denotes the translation vector, B denotes the optical axis spacing between the first lens and the second lens, N denotes the number of image pixels, L denotes the marker spacing, $T_x$ denotes the center deviation abscissa value, and $T_y$ denotes the center deviation ordinate value.

The derivation process of the formula of the mapping relationship between the object distances and the center deviations is as below.

For example, the two lenses are mounted side by side in the vertical direction, and the horizontal spacing of optical axes of the lenses is zero. FIG. 5 is a diagram of a lens center deviation. As shown in FIG. 5, the optical axis of lens assembly 1, that is, the first lens, is parallel to the optical axis of lens assembly 2, that is, the second lens. B denotes the optical axis spacing in the vertical direction. D denotes an object distance. f denotes a focal length. b denotes a center deviation of images imaged by the two lenses. In this case, $\dfrac{b}{f} = \dfrac{B}{D}$. When an included angle $\beta$ exists between the optical axis of the first lens and the optical axis of the second lens, C denotes a deviation caused by the included angle. $C=D*\tan\beta$. A deviation caused by C is c. In this case, $\frac{c}{f}=\frac{C}{D}$.

The center deviation of images is composed of the deviation b caused by B and the deviation c caused by C. The total deviation is Offset. In this case, $\text{Offset}=b+c=\left(\frac{B}{D}+\tan\beta\right)*f$. At the calibration object distance $D_c$, $\text{Offset}_{D_c}=b+c=\left(\frac{B}{D_c}+\tan\beta\right)*f$. Therefore, for any object distance, the center deviation may be expressed as $\text{Offset}_{Dc}-\frac{B}{Dc}f+\frac{B}{D}f$.

$\text{Offset}_{Dc}$ denotes a center deviation when the object distance is $D_c$, that is $(T_x, T_y)$. B and $D_c$ may be obtained in the calibration process, and f may be obtained through the following formula: $\frac{n*p}{f}=\frac{L}{D_c}$. Therefore, $f=\frac{D_c np}{L}$. f is substituted into $\text{Offset}_D=\text{Offset}_{Dc}-\frac{B}{Dc}f+\frac{B}{D}f$, and $\text{Offset}_D$ is converted into a pixel size, thereby obtaining $\text{Offset}_{Dp}=\text{Offset}_{Dcp}-\frac{Bn}{L}+\frac{BnD_c}{LD}$. Thus the formula of the mapping relationship between the object distances and the center deviations may be obtained.

For example, in the process of performing translation of the plurality of frames of images according to the center deviation parameter, the center correction scaling rate may be set. The definition of the center correction scaling rate indicates that when the plurality of frames of images after distortion correction are translated according to the center deviation parameter, translation regions in the plurality of frames of images are determined according to the center correction scaling rate. Exemplarily, the center correction scaling rate may be set to 96%. That is, center translation correction is performed on regions obtained by cropping 96% of the plurality of frames of images. The center correction scaling rate may be set according to a hardware error of the zoom imaging device. However, the specific value of the center correction scaling rate is not limited in this embodiment.

For example, in the process of performing rotation on the plurality of frames of images according to the rotation parameter, the rotation correction scaling rate may be set. The definition of the rotation correction scaling rate indicates that when the translated images are rotated according to the rotation parameter, rotation regions in the translation regions are determined according to the rotation correction scaling rate. Exemplarily, the rotation correction scaling rate may be set to 94%. That is, rotation correction is performed on regions obtained by cropping 94% of the regions after center translation correction. The rotation correction scaling rate may be set according to a hardware error of the zoom imaging device. However, the specific value of the rotation correction scaling rate is not limited in this embodiment.

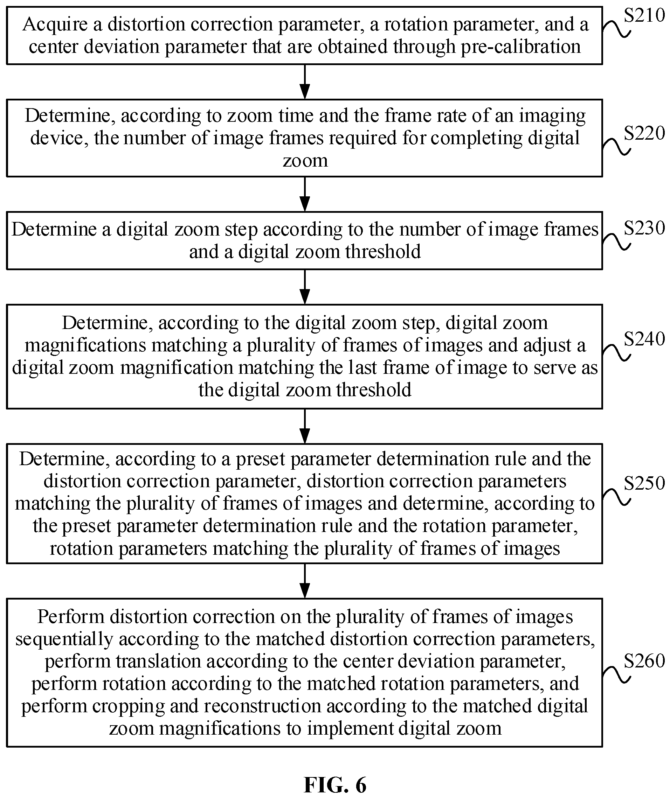

FIG. 6 is a flowchart of the digital zoom method according to another embodiment of the present application. This embodiment of the present application is a refinement of the determination process of digital zoom magnifications matching a plurality of frames of images on the basis of the preceding embodiment.

As shown in FIG. 6, the method in this embodiment of the present application includes the steps below.

In S210, a distortion correction parameter, a rotation parameter, and a center deviation parameter that are obtained through pre-calibration are acquired.

In S220, the number of image frames required for completing digital zoom is determined according to zoom time and the frame rate of an imaging device.

The acquisition process of the zoom time has been described specifically in the preceding embodiment, which is not repeated in this embodiment. The imaging device includes at least two lenses, that is, the first lens and the second lens in the preceding embodiment. The frame rate of the imaging device may reflect the number of images captured per second.

For example, the unit of the zoom time is converted into seconds, and then the zoom time is multiplied by the frame rate of the imaging device to obtain the number of image frames required for completing digital zoom. In the digital zoom process, distortion correction, center translation correction, and rotation correction need to be gradually performed on the plurality of frames of images, and digital zoom is performed on the corrected plurality of frames of images so as to implement smooth image transition in the digital zoom process and reduce the loss of field angles.

In S230, a digital zoom step is determined according to the number of image frames and a digital zoom threshold.

For example, in the digital zoom process, digital zoom needs to be gradually completed on the plurality of frames of images. That is, after digital zoom is performed on the plurality of frames of images, the digital zoom magnification of the last frame of image reaches the digital zoom threshold. Therefore, the digital zoom step may be determined according to the number of image frames and the digital zoom threshold.

Exemplarily, a theoretical digital zoom step may be expressed as the following:

$$\text{step} = \sqrt[f_n - 1]{Z_{thd}}.$$

Here, step denotes the theoretical digital zoom step, $f_n$ denotes the number of image frames, and $Z_{thd}$ denotes the digital zoom threshold. In the preceding formula, the theoretical digital zoom step between two consecutive frames of images is obtained by performing a square root calculation on the digital zoom threshold by the power of $f_n$ - 1. That is, after the digital zoom magnifications are gradually increased according to the theoretical digital zoom step, a digital zoom magnification matching the last frame of image just reaches the digital zoom threshold.

For example, after the theoretical digital zoom step is obtained, in order to make the digital zoom magnifications matching the plurality of frames of images be integers, the theoretical digital zoom step can be rounded down to obtain the digital zoom step $Z_{step}$.

In S240, the digital zoom magnifications matching the plurality of frames of images are determined according to the digital zoom step, and the digital zoom magnification matching the last frame of image is adjusted to serve as the digital zoom threshold.

Among the remaining images excluding the last frame of image in the plurality of frames of images, a ratio of the digital zoom magnification of the current frame of image to the digital zoom magnification of the previous frame of image is the digital zoom step.

For example, $Z_{step}^{f_n - 1} < Z_{thd}$. That is, after the digital zoom magnifications matching the plurality of frames of images are amplified according to the digital zoom step, the digital zoom magnification matching the last frame of image is less than the digital zoom threshold. Therefore, the digital zoom magnification matching the last frame of image needs to be adjusted to serve as the digital zoom threshold.

In this embodiment of the present application, the arrangement in which the digital zoom magnification matching the last frame of image is the digital zoom threshold can avoid the inconsistency of field angles caused by accuracy loss. Exemplarily, digital zoom is completed over $f_n$ frames. The digital zoom magnifications matching the plurality of frames of images may be expressed as $Z_{step}^1$, $Z_{step}^2$, ..., $Z_{step}^{f_n-1}$, and $Z_{thd}$. $Z_{step}^0$ is a digital zoom magnification when the first lens is at a focal length of f1. In this case, the digital zoom magnification is 1.

In S250, distortion correction parameters matching the plurality of frames of images are determined according to a preset parameter determination rule and the distortion correction parameter, and rotation parameters matching the plurality of frames of images are determined according to the preset parameter determination rule and the rotation parameter.

In this embodiment of the present application, for example, the preset parameter determination rule includes E1 to E2.

In E1, if it is determined that a target correction parameter obtained through pre-calibration is less than a product of the number of image frames and an effective step of the target correction parameter, target correction parameters matching the plurality of frames of images are determined according to the effective step of the target correction parameter from the first frame of image.

Among the plurality of frames of images, a difference between a target correction parameter matching the current frame of image and a target correction parameter matching the previous frame of image is the effective step of the target correction parameter. The target correction parameter is the distortion correction parameter or the rotation parameter.

In an embodiment, the effective step of the target correction parameter may be determined according to an actual situation. The specific value of the effective step of the target correction parameter is not limited in this embodiment of the present application. Exemplarily, the effective step of the target correction parameter may be the minimum effective step. The minimum effective step may reflect that two consecutive frames of images have a step with a certain correction effect in the switching process.

For example, in the determination process of the target correction parameters matching the plurality of frames of images, if the target correction parameter obtained through pre-calibration is less than the product of the number of image frames and the effective step of the target correction parameter, it indicates that among the plurality of frames of images, at the last frame of image or before the last frame of image, the target correction parameters matching the plurality of frames of images have already reached the target correction parameter. Thus the target correction parameters matching the plurality of frames of images may be determined according to the effective step of the target correction parameter.

In E2, if it is determined that a product of the number of the current frame of image and multiple frames of images before the current frame of image and the effective step of the target correction parameter is greater than or equal to the target correction parameter obtained through pre-calibration, the target correction parameter obtained through pre-calibration is taken as a target correction parameter matching each of the current frame of image and multiple frames of images after the current frame of image.

In this embodiment of the present application, since the target correction parameter obtained through pre-calibration is less than the product of the number of image frames and the effective step of the target correction parameter, after the target correction parameters matching the plurality of frames of images are determined according to the effective step of the target correction parameter, a target correction parameter matching each of the current frame of image and the frames of images after the current frame of image are greater than or equal to the target correction parameter. The target correction parameter obtained through pre-calibration needs to be taken as a target correction parameter matching each of the current frame of image and the frames of images after the current frame of image.

Exemplarily, $k_x$ denotes target correction parameter obtained through pre-calibration, and $D_{step}$ denotes the effective step of the target correction parameter. In this case, target correction parameters matching multiple frames of images may be expressed as $D_{step} * 1$, $D_{step} * 2$, ..., $D_{step} * (i - 1)$, $k_x$, ..., and $k_x$.

In this solution, target correction parameters matching the frames of images before the current frame of image are gradually increased according to the effective step of the target correction parameter, and a target correction parameter matching each of the current frame of image and the frames of images after the current frame of image is set to the target correction parameter obtained through pre-calibration. In this case, the change of the rotation correction and distortion correction degrees of an image close to a switching point of the first lens and the second lens is relatively low in the digital zoom process, guaranteeing the smooth image transition in the lens switching process.

In this embodiment of the present application, for example, the preset parameter determination rule also includes F1 to F2.

In F1, if it is determined that the target correction parameter obtained through pre-calibration is greater than or equal to the product of the number of image frames and the effective step of the target correction parameter, the target correction parameters matching the plurality of frames of images are determined according to the effective step of the target correction parameter from the first frame of image, and a difference between the target correction parameter obtained through pre-calibration and a target correction parameter matching the last frame of image is calculated.

For example, if it is determined that the target correction parameter obtained through pre-calibration is greater than or equal to the product of the number of image frames and the effective step of the target correction parameter, it indicates that the target correction parameters matching the plurality of frames of images are gradually increased according to the effective step of the target correction parameter. The target correction parameter matching the last frame of image may be less than the target correction parameter obtained through pre-calibration. Subsequent adjustment needs to be performed according to the difference between the target correction parameter obtained through pre-calibration and the target correction parameter matching the last frame of image so that the target correction parameter matching the last frame of image reaches the target correction parameter obtained through pre-calibration.

Exemplarily, the difference $K_{remain}$ between the target correction parameter obtained through pre-calibration and the target correction parameter matching the last frame of image may be expressed as follows:

$$k_{remain} = k_x - D_{step} * f_n.$$

In F2, an operation of determining, according to the effective step of the target correction parameter, the target correction parameters matching the plurality of frames of images from the first frame of image is repeatedly performed until a target correction parameter matching a target frame of image is greater than or equal to the target correction parameter obtained through pre-calibration, and the target correction parameter obtained through pre-calibration is taken as a target correction parameter matching each of the target frame of image and multiple frames of images after the target frame of image.

A difference between target correction parameters of two adjacent frames of images before the target frame of image is greater than or equal to a difference between target correction parameters of two adjacent frames of images among the target frame of image and images after the target frame of image.

Exemplarily, the number of image frames is 5, the target correction parameter obtained through pre-calibration is 20, and the effective step of the target correction parameter is 3. In this case, the target correction parameters matching the plurality of image frames are determined to be 3, 6, 9, 12, and 15 according to the effective step of the target correction parameter. Because the target correction parameter matching the last frame of image is less than the target correction parameter obtained through pre-calibration, the target correction parameters matching the plurality of image frames need to be adjusted according to the effective step of the target correction parameter and $K_{remain}$. In an embodiment, after the target correction parameters matching the plurality of frames of images are preliminarily adjusted to be 6, 9, 12, 15, and 18. Because the target correction parameters matching the last frame of image are still less than the target correction parameter obtained through pre-calibration, the target correction parameters matching with the plurality of frames of images are adjusted again to be 9, 12, 15, 18, and 20. The preceding example is merely a specific manner of determining the target correction parameters matching the plurality of frames of images. The determination process of the target correction parameters matching the plurality of frames of images is not limited in this embodiment of the present application.

With this arrangement in this solution, among the target correction parameters matching the plurality of frames of images, a difference between target correction parameters matching multiple frames of image close to the lens switching point (close to the last frame of image) is relatively small so that the change amount of the rotation correction and distortion correction degrees of the image close to the lens switching point is relatively low in the digital zooming process, guaranteeing the smooth image transition in the lens switching process.

In S260, distortion correction is performed on the plurality of frames of images sequentially according to the matched distortion correction parameters, translation is performed according to the center deviation parameter, rotation is performed according to the matched rotation parameters, and cropping and reconstruction are performed according to the matched digital zoom magnifications to implement digital zoom.

The technical solution in this embodiment of the present application includes the following. A distortion correction parameter, a rotation parameter, and a center deviation parameter that are obtained through pre-calibration are acquired; the number of image frames required for completing digital zoom is determined according to zoom time and the frame rate of an imaging device; a digital zoom step is determined according to the number of image frames and a digital zoom threshold; digital zoom magnifications matching a plurality of frames of images are determined according to the digital zoom step, and a digital zoom magnification matching the last frame of image is adjusted to serve as the digital zoom threshold; distortion correction parameters matching the plurality of frames of images are determined according to a preset parameter determination rule and the distortion correction parameter, and rotation parameters matching the plurality of frames of images are determined according to the preset parameter determination rule and the rotation parameter; and distortion correction is performed on the plurality of frames of images sequentially according to the matched distortion correction parameters, translation is performed according to the center deviation parameter, rotation is performed according to the matched rotation parameters, and cropping and reconstruction are performed according to the matched digital zoom magnifications to implement digital zoom. According to this technical solution, the digital zoom magnifications matching the plurality of frames of images are determined according to the digital zoom step, and the digital zoom magnification matching the last frame of image is adjusted to serve as the digital zoom threshold, avoiding the inconsistency of field angles caused by accuracy loss and improve the smoothness of image switching in the digital zoom process.

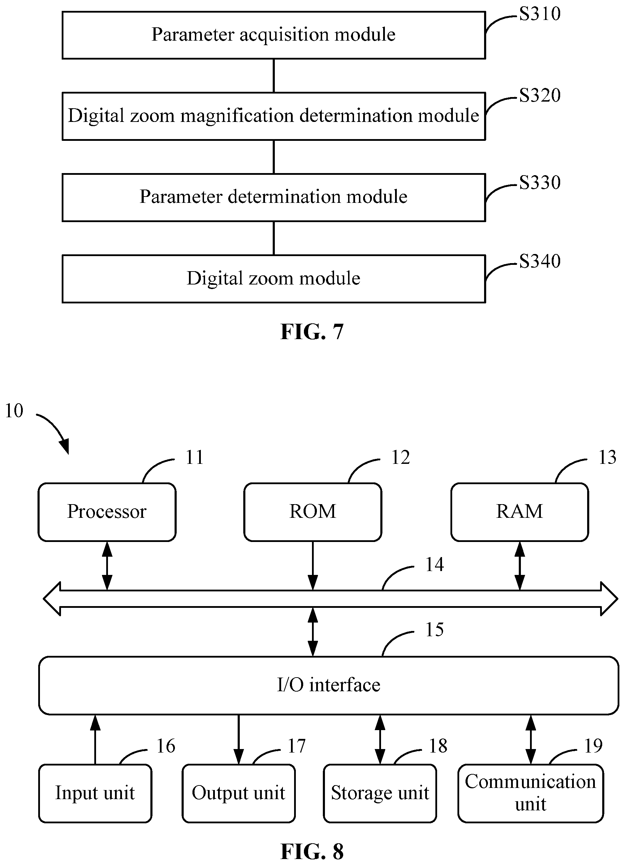

FIG. 7 is a structure diagram of a digital zoom apparatus according to an embodiment of the present application. The apparatus may perform the digital zoom method according to any embodiment of the present application, and has functional modules and effects corresponding to the method performed. As shown in FIG. 7, the apparatus includes a parameter acquisition module 310, a digital zoom magnification determination module 320, a parameter determination module 330, and a digital zoom module 340.

The parameter acquisition module 310 is configured to acquire a distortion correction parameter, a rotation parameter, and a center deviation parameter that are obtained through pre-calibration.

The digital zoom magnification determination module 320 is configured to determine, according to a digital zoom threshold and zoom time, digital zoom magnifications matching a plurality of frames of images.

The parameter determination module 330 is configured to determine, according to a preset parameter determination rule and the distortion correction parameter, distortion correction parameters matching the plurality of frames of images and determine, according to the preset parameter determination rule and the rotation parameter, rotation parameters matching the plurality of frames of images.

The digital zoom module 340 is configured to perform distortion correction on the plurality of frames of images sequentially according to the matched distortion correction parameters, perform translation according to the center deviation parameter, perform rotation according to the matched rotation parameters, and perform cropping and reconstruction according to the matched digital zoom magnifications to implement digital zoom.

For example, the digital zoom magnification determination module 320 includes an image frame number determination unit, a digital zoom step determination unit, and a digital zoom magnification determination unit.

The image frame number determination unit is configured to determine, according to the zoom time and the frame rate of an imaging device, the number of image frames required for completing the digital zoom.

The digital zoom step determination unit is configured to determine a digital zoom step according to the number of image frames and a digital zoom threshold.

The digital zoom magnification determination unit is configured to determine, according to the digital zoom step, the digital zoom magnifications matching the plurality of frames of images and adjust a digital zoom magnification matching the last frame of image to serve as the digital zoom threshold.

For example, the apparatus further includes a rule determination module configured to determine a preset parameter determination rule. The rule determination module includes a first target correction parameter determination unit and a second target correction parameter determination unit.

The first target correction parameter determination unit is configured to determine, according to an effective step of a target correction parameter, target correction parameters matching the plurality of frames of images from the first frame of image if it is determined that a target correction parameter obtained through pre-calibration is less than a product of the number of image frames and the effective step of the target correction parameter.

Among the plurality of frames of images, a difference between a target correction parameter matching the current frame of image and a target correction parameter matching the previous frame of image is the effective step of the target correction parameter.

The second target correction parameter determination unit is configured to take the target correction parameter obtained through pre-calibration as a target correction parameter matching each of the current frame of image and multiple frames of images after the current frame of image if it is determined that a product of the number of the current frame of image and multiple frames of images before the current frame of image and the effective step of the target correction parameter is greater than or equal to the target correction parameter obtained through pre-calibration.

The target correction parameter is the distortion correction parameter or the rotation parameter.

For example, the rule determination module further includes a third target correction parameter determination unit and a fourth target correction parameter determination unit.

The third target correction parameter determination unit is configured to determine, according to the effective step of the target correction parameter, the target correction parameters matching the plurality of frames of images from the first frame of image and calculate a difference between the target correction parameter obtained through pre-calibration and a target correction parameter matching the last frame of image if it is determined that the target correction parameter obtained through pre-calibration is greater than or equal to the product of the number of image frames and the effective step of the target correction parameter.

The fourth target correction parameter determination unit is configured to repeatedly perform an operation of determining, according to the effective step of the target correction parameter, the target correction parameters matching the plurality of frames of images from the first frame of image until a target correction parameter matching a target frame of image is greater than or equal to the target correction parameter obtained through pre-calibration and take the target correction parameter obtained through pre-calibration as a target correction parameter matching each of the target frame of image and multiple frames of images after the target frame of image.

For example, the apparatus further includes a distortion correction parameter calibration module configured to perform the operations below.

A first checkerboard calibration image of a first lens when an object distance is infinite and a second checkerboard calibration image of a second lens when the object distance is infinite are acquired separately, and corner recognition is performed on the first checkerboard calibration image and the second checkerboard calibration image separately.

Distortion rates of a plurality of corners in the second checkerboard calibration image are determined to obtain a second distortion rate curve.

A first distortion coefficient is obtained by fitting according to corner actual distances of a plurality of corners in the first checkerboard calibration image and corner ideal distances of the plurality of corners in the first checkerboard calibration image.

Distortion correction is performed on the first checkerboard calibration image according to a target distortion coefficient, and a target distortion rate curve is obtained according to distortion rates of the plurality of corners in the first checkerboard calibration image after distortion correction.

The value of the target distortion coefficient ranges from 0 to the first distortion coefficient.

A corresponding target distortion coefficient when an error between the target distortion rate curve and the second distortion rate curve meets a preset error condition is taken as the distortion correction parameter.

For example, the apparatus further includes a center deviation parameter calibration module configured to perform the operations below.

The current object distance is determined according to the current zoom position of the second lens of the imaging device, the current focus position of the second lens, and a relationship curve between focus positions and object distances of the second lens.

The center deviation parameter is obtained according to the current object distance and a mapping relationship between the object distances and center deviations, where the mapping relationship is obtained through pre-calibration.

For example, the apparatus further includes a module for calibrating the mapping relationship between the object distances and the center deviations. The module is configured to perform the operations below.

A first marker calibration image of the first lens and a second marker calibration image of the second lens at a calibration object distance are acquired separately.

Feature point matching is performed on the first marker calibration image and the second marker calibration image to obtain a first feature point set and a second feature point set.

A scaling coefficient, the rotation parameter, a center deviation abscissa value, and a center deviation ordinate value are obtained according to the first feature point set, the second feature point set, and a similarity transformation formula.

A pixel deviation is determined according to optical axis spacing between the first lens and the second lens, the number of image pixels, and marker spacing.

A translation vector is determined according to the center deviation abscissa value and the center deviation ordinate value.

The mapping relationship between the object distances and the center deviations is determined according to the pixel deviation, the translation vector, and the calibration object distance.

The digital zoom apparatus provided in this embodiment of the present application may perform the digital zoom method provided in any embodiment of the present application and has functional modules and beneficial effects corresponding to the method performed.

FIG. 8 is a structure diagram of an electronic device 10 for implementing embodiments of the present application. The electronic device is intended to represent various forms of digital computers, for example, a laptop computer, a desktop computer, a worktable, a personal digital assistant, a server, a blade server, a mainframe computer, or another applicable computer. The electronic device may also represent various forms of mobile apparatuses, for example, a personal digital assistant, a cellphone, a smartphone, a wearable device (such as a helmet, glasses, or a watch), or another similar computing apparatus. Herein the shown components, the connections and relationships between these components, and the functions of these components are merely illustrative and are not intended to limit the implementation of the present application as described and/or claimed herein.

As shown in FIG. 8, the electronic device 10 includes at least one processor 11 and a memory, such as a read-only memory (ROM) 12 or a random-access memory (RAM) 13, communicatively connected to the at least one processor 11. The memory stores a computer program executable by the at least one processor. The at least one processor 11 may perform various types of appropriate operations and processing according to a computer program stored in a read-only memory (ROM) 12 or a computer program loaded from a storage unit 18 to a random-access memory (RAM) 13. The RAM 13 may also store various programs and data required for the operation of the electronic device 10. The at least one processor 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard and a mouse, an output unit 17 such as various types of displays and speakers, the storage unit 18 such as a magnetic disk and an optical disk, and a communication unit 19 such as a network card, a modem and a wireless communication transceiver. The communication unit 19 allows the electronic device 10 to exchange information/data with other devices over a computer network such as the Internet and/or various telecommunications networks.

The at least one processor 11 may be various general-purpose and/or special-purpose processing components having processing and computing capabilities. Some examples of a processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The processor 11 performs the various methods and processing described above, such as the digital zoom method.

In some embodiments, the digital zoom method may be implemented as a computer software program tangibly contained in a computer-readable storage medium such as the storage unit 18. In some embodiments, part or all of computer programs may be loaded and/or installed onto the electronic device 10 via the ROM 12 and/or the communication unit 19. When the computer program is loaded to the RAM 13 and executed by the processor 11, one or more steps of the preceding digital zoom method may be executed. Alternatively, in other embodiments, the processor 11 may be configured, in any other suitable manner (for example, by means of firmware), to perform the digital zoom method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting data and instructions to the memory system, the at least one input apparatus and the at least one output apparatus.

Computer programs for implementation of the method of the present application may be written in any combination of one or more programming languages. These computer programs may be provided for a processor of a general-purpose computer, a special-purpose computer or another programmable data processing apparatus such that the computer programs, when executed by the processor, cause functions/operations specified in the flowcharts and/or block diagrams to be implemented. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may contain or store the computer programs that are used by or in conjunction with a system, apparatus or device that executes instructions. The computer-readable storage medium may include, but is not limited to, an electronic, magnetic, optical, electromagnetic, infrared or semiconductor system, apparatus or device, or any suitable combination thereof. Alternatively, the computer-readable storage medium may be a machine-readable signal medium. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof. The computer-readable storage medium may be a non-transient computer-readable storage medium.

In order that interaction with a user is provided, the systems and techniques described herein may be implemented on an electronic device. The electronic device has a display apparatus for displaying information to the user, such as a cathode-ray tube (CRT) or a liquid-crystal display (LCD) monitor, and a keyboard and a pointing apparatus such as a mouse or a trackball through which the user can provide input to the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server avoids the cases of difficult management and weak service scalability in a physical host and a VPS service in the related art.

It is to be understood that various forms of the preceding flows may be used with steps reordered, added, or removed. For example, the steps described in the present application may be executed in parallel, in sequence or in a different order as long as the desired results of the technical solutions in the present application are achieved. The execution sequence of these steps is not limited herein.

**Claims**

1. A digital zoom method, comprising:

   acquiring a distortion correction parameter, a rotation parameter, and a center deviation parameter that are obtained through pre-calibration;
   determining, according to a digital zoom threshold and zoom time, digital zoom magnifications matching a plurality of frames of images;
   determining, according to a preset parameter determination rule and the distortion correction parameter, distortion correction parameters matching the plurality of frames of images and determining, according to the preset parameter determination rule and the rotation parameter, rotation parameters matching the plurality of frames of images; and
   performing distortion correction on the plurality of frames of images sequentially according to the matched distortion correction parameters, performing translation according to the center deviation parameter, performing rotation according to the matched rotation parameters, and performing cropping and reconstruction according to the matched digital zoom magnifications to implement digital zoom.

2. The method according to claim 1, wherein determining, according to the digital zoom threshold and the zoom time, the digital zoom magnifications matching the plurality of frames of images comprises:

> determining, according to the zoom time and a frame rate of an imaging device, a number of image frames required for completing the digital zoom;
> determining a digital zoom step according to the number of image frames and the digital zoom threshold; and
> determining, according to the digital zoom step, the digital zoom magnifications matching the plurality of frames of images and adjusting a digital zoom magnification matching a last frame of image to serve as the digital zoom threshold.

3. The method according to claim 2, wherein the preset parameter determination rule comprises:

> in response to determining that a target correction parameter obtained through pre-calibration is less than a product of the number of image frames and an effective step of the target correction parameter, determining, according to the effective step of the target correction parameter, target correction parameters matching the plurality of frames of images from a first frame of image, wherein
> among the plurality of frames of images, a difference between a target correction parameter matching a current frame of image and a target correction parameter matching a previous frame of image is the effective step of the target correction parameter; and
> in response to determining a product of a number of the current frame of image and multiple frames of images before the current frame of image and the effective step of the target correction parameter is greater than or equal to the target correction parameter obtained through pre-calibration, taking the target correction parameter obtained through pre-calibration as a target correction parameter matching each of the current frame of image and multiple frames of images after the current frame of image, wherein
> the target correction parameter is the distortion correction parameter or the rotation parameter.

4. The method according to claim 3, wherein the preset parameter determination rule further comprises:

> in response to determining that the target correction parameter obtained through pre-calibration is greater than or equal to the product of the number of image frames and the effective step of the target correction parameter, determining, according to the effective step of the target correction parameter, the target correction parameters matching the plurality of frames of images from the first frame of image and calculating a difference between the target correction parameter obtained through pre-calibration and a target correction parameter matching the last frame of image; and
> repeatedly performing an operation of determining, according to the effective step of the target correction parameter, the target correction parameters matching the plurality of frames of images from the first frame of image until a target correction parameter matching a target frame of image is greater than or equal to the target correction parameter obtained through pre-calibration and taking the target correction parameter obtained through pre-calibration as a target correction parameter matching each of the target frame of image and multiple frames of images after the target frame of image;
> wherein a difference between target correction parameters of two adjacent frames of images before the target frame of image is greater than or equal to a difference between target correction parameters of two adjacent frames of images among the target frame of image and images after the target frame of image.

5. The method according to claim 1, wherein a pre-calibration process of the distortion correction parameter comprises:

> acquiring a first checkerboard calibration image of a first lens when an object distance is infinite and a second checkerboard calibration image of a second lens when the object distance is infinite separately and performing corner recognition on the first checkerboard calibration image and the second checkerboard calibration image separately;
> determining distortion rates of a plurality of corners in the second checkerboard calibration image to obtain a second distortion rate curve;
> obtaining a first distortion coefficient by fitting according to corner actual distances of a plurality of corners in the first checkerboard calibration image and corner ideal distances of the plurality of corners in the first checkerboard calibration image;
> performing distortion correction on the first checkerboard calibration image according to a target distortion coefficient and obtaining a target distortion rate curve according to distortion rates of the plurality of corners in the first checkerboard calibration image after the distortion correction, wherein
> a value of the target distortion coefficient ranges from 0 to the first distortion coefficient; and

taking a corresponding target distortion coefficient when an error between the target distortion rate curve and the second distortion rate curve meets a preset error condition as the distortion correction parameter.

6. The method according to claim 1, wherein a pre-calibration process of the center deviation parameter comprises:

   determining a current object distance according to a current zoom position of a second lens of an imaging device, a current focus position of the second lens, and a relationship curve between focus positions and object distances of the second lens; and
   obtaining the center deviation parameter according to the current object distance and a mapping relationship between the object distances and center deviations, wherein the mapping relationship is obtained through pre-calibration.

7. The method according to claim 6, wherein a pre-calibration process of the mapping relationship between the object distances and the center deviations comprises:

   acquiring a first marker calibration image of a first lens and a second marker calibration image of the second lens at a calibration object distance separately;
   performing feature point matching on the first marker calibration image and the second marker calibration image to obtain a first feature point set and a second feature point set;
   obtaining a scaling coefficient, the rotation parameter, a center deviation abscissa value, and a center deviation ordinate value according to the first feature point set, the second feature point set, and a similarity transformation formula;
   determining a pixel deviation according to optical axis spacing between the first lens and the second lens, a number of image pixels, and marker spacing;
   determining a translation vector according to the center deviation abscissa value and the center deviation ordinate value; and
   determining the mapping relationship between the object distances and the center deviations according to the pixel deviation, the translation vector, and the calibration object distance.

8. A digital zoom apparatus, comprising:

   a parameter acquisition module configured to acquire a distortion correction parameter, a rotation parameter, and a center deviation parameter that are obtained through pre-calibration;
   a digital zoom magnification determination module configured to determine, according to a digital zoom threshold and zoom time, digital zoom magnifications matching a plurality of frames of images;
   a parameter determination module configured to determine, according to a preset parameter determination rule and the distortion correction parameter, distortion correction parameters matching the plurality of frames of images and determine, according to the preset parameter determination rule and the rotation parameter, rotation parameters matching the plurality of frames of images; and
   a digital zoom module configured to perform distortion correction on the plurality of frames of images sequentially according to the matched distortion correction parameters, perform translation according to the center deviation parameter, perform rotation according to the matched rotation parameters, and perform cropping and reconstruction according to the matched digital zoom magnifications to implement digital zoom.

9. An electronic device, comprising:

   at least one processor; and
   a memory communicatively connected to the at least one processor,
   wherein the memory stores computer instructions executable by the at least one processor, and the computer instructions are executed by the at least one processor to cause the at least one processor to perform the digital zoom method according to any one of claims 1 to 7.

10. A computer-readable storage medium for storing computer instructions, wherein the computer instructions, when executed by a processor, implement the digital zoom method according to any one of claims 1 to 7.

Acquire a distortion correction parameter, a rotation parameter, and a center deviation parameter that are obtained through pre-calibration $\sim$S110

Determine, according to a digital zoom threshold and zoom time, digital zoom magnifications matching a plurality of frames of images $\sim$S120

Determine, according to a preset parameter determination rule and the distortion correction parameter, distortion correction parameters matching the plurality of frames of images and determine, according to the preset parameter determination rule and the rotation parameter, rotation parameters matching the plurality of frames of images; and $\sim$S130

Perform distortion correction on the plurality of frames of images sequentially according to the matched distortion correction parameters, perform translation according to the center deviation parameter, perform rotation according to the matched rotation parameters, and perform cropping and reconstruction according to the matched digital zoom magnifications to implement digital zoom $\sim$S140

**FIG. 1**

**FIG. 2A**

**FIG. 2B**

**FIG. 2C**

**FIG. 3**

**FIG. 4**

**FIG. 5**

Acquire a distortion correction parameter, a rotation parameter, and a center deviation parameter that are obtained through pre-calibration　　S210

Determine, according to zoom time and the frame rate of an imaging device, the number of image frames required for completing digital zoom　　S220

Determine a digital zoom step according to the number of image frames and a digital zoom threshold　　S230

Determine, according to the digital zoom step, digital zoom magnifications matching a plurality of frames of images and adjust a digital zoom magnification matching the last frame of image to serve as the digital zoom threshold　　S240

Determine, according to a preset parameter determination rule and the distortion correction parameter, distortion correction parameters matching the plurality of frames of images and determine, according to the preset parameter determination rule and the rotation parameter, rotation parameters matching the plurality of frames of images　　S250

Perform distortion correction on the plurality of frames of images sequentially according to the matched distortion correction parameters, perform translation according to the center deviation parameter, perform rotation according to the matched rotation parameters, and perform cropping and reconstruction according to the matched digital zoom magnifications to implement digital zoom　　S260

**FIG. 6**

| Parameter acquisition module | S310 |

| Digital zoom magnification determination module | S320 |

| Parameter determination module | S330 |

| Digital zoom module | S340 |

**FIG. 7**

10

| Processor | 11 |
| ROM | 12 |
| RAM | 13 |

14

15

| I/O interface |

| Input unit | 16 |
| Output unit | 17 |
| Storage unit | 18 |
| Communication unit | 19 |

**FIG. 8**

## INTERNATIONAL SEARCH REPORT

| International application No. |
|---|
| **PCT/CN2023/097002** |

### A. CLASSIFICATION OF SUBJECT MATTER

H04N5/208(2006.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKIA, VEN, USTXT, EPTXT, WOTXT: 摄像机, 变焦, 变倍, 倍率, 跳变, 切换, 校正, 中心偏差, 畸变, 旋转, 帧, camera, zoom, magnification, power, switch, correction, offset, distortion, deviation, translation, rotation, frame

### C. DOCUMENTS CONSIDERED TO BE RELEVANT

| Category* | Citation of document, with indication, where appropriate, of the relevant passages | Relevant to claim No. |
|---|---|---|
| A | CN 104268863 A (ZHEJIANG UNIVIEW TECHNOLOGIES CO., LTD.) 07 January 2015 (2015-01-07)<br>entire document | 1-10 |
| A | CN 113630549 A (BEIJING KUANGSHI TECHNOLOGY CO., LTD. et al.) 09 November 2021 (2021-11-09)<br>entire document | 1-10 |
| A | CN 113691777 A (ZHEJIANG DAHUA TECHNOLOGY CO., LTD.) 23 November 2021 (2021-11-23)<br>entire document | 1-10 |
| A | WO 2021185130 A1 (SPREADTRUM COMMUNICATIONS (SHANGHAI) CO., LTD.) 23 September 2021 (2021-09-23)<br>entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 September 2023** | **08 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/097002**

| Patent document cited in search report | | | Publication date (day/month/year) | Patent family member(s) | Publication date (day/month/year) |
|---|---|---|---|---|---|
| CN | 104268863 | A | 07 January 2015 | None | |
| CN | 113630549 | A | 09 November 2021 | None | |
| CN | 113691777 | A | 23 November 2021 | None | |
| WO | 2021185130 | A1 | 23 September 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211613146